# EUROPÄISCHE PATENTSCHRIFT

(11) **EP 2 089 210 B1**
(45) Veröffentlichungstag und Bekanntmachung des Hinweises auf die Patenterteilung: **16.10.2013**
(21) Anmeldenummer: 07856477.0
(22) Anmeldetag: 08.12.2007
(51) Int. Cl.: B29C 47/00, C08L 27/06, A61J 1/05

(54) **VERFAHREN ZUR HERSTELLUNG EINES MEDIZINISCHEN FLÜSSIGKEITSBEHÄLTERS AUS FLEXIBLEM KUNSTSTOFFMATERIAL, FOLIENSCHLAUCH ALS ZWISCHENPRODUKT FÜR EINEN DERARTIGEN MEDIZINISCHEN BEHÄLTER SOWIE MEDIZINISCHER BEHÄLTER, HERGESTELLT NACH EINEM DERARTIGEN VERFAHREN**
PROCESS FOR THE PRODUCTION OF A MEDICINAL LIQUID CONTAINER COMPOSED OF FLEXIBLE PLASTICS MATERIAL, FILM TUBE AS INTERMEDIATE PRODUCT FOR THIS MEDICINAL CONTAINER, AND MEDICINAL CONTAINER PRODUCED BY THIS PROCESS
PROCÉDÉ DE FABRICATION D'UN RÉCIPIENT À LIQUIDE MÉDICAL EN MATIÈRE SYNTHÉTIQUE FLEXIBLE, MANCHON EN FILM SERVANT DE PRODUIT INTERMÉDIAIRE POUR CE RÉCIPIENT MÉDICAL ET RÉCIPIENT MÉDICAL FABRIQUÉ AVEC CE PROCÉDÉ

(30) Priorität: 12.12.2006 DE 102006058498
(43) Veröffentlichungstag der Anmeldung: 19.08.2009
(73) Patentinhaber: RAUMEDIC AG, 95213 Münchberg (DE)
(72) Erfinder: KÜHLEIN, Georg, 95195 Röslau (DE); SCHENKEL, Martin, 91625 Schnelldorf (DE)
(74) Vertreter: Hofmann, Matthias
(86) Internationale Anmeldenummer: PCT/EP2007/010701
(87) Internationale Veröffentlichungsnummer: WO 2008/071358

(56) Entgegenhaltungen:
- EP-A- 0 104 433
- EP-A- 0 366 554
- DE-A1- 2 520 229
- US-A1- 2002 002 238

## Beschreibung

Die Erfindung betrifft ein Verfahren zur Herstellung eines medizinischen Flüssigkeitsbehälters aus flexiblem Kunststoffmaterial. Ferner betrifft die Erfindung einen Folietischlauch als Zwischenprodukt für einen derart hergestellten medizinischen Behälter sowie einen nach einem derartigen Verfahren hergestellten medizinischen Behälter.

Es ist durch offenkundige Vorbenutzung bekannt, einen medizinischen Flüssigkeitsbehälter, nämlich einen Blutbeutel, aus flexiblem Kunststoffmaterial herzustellen. Dabei wird der Blutbeutel aus zwei kalandrierten Folienlagen, die aufeinander gelegt und randseitig verschweißt werden, hergestellt. Das Kalandrieren ist notwendig, um die dem Behälterinneren zugewandten Oberflächen der Folienlagen zu strukturieren, damit die Folienlagen, die das Innere des Behälters definieren, nicht unerwünscht zusammenkleben und hierdurch ein Befüllen des Flüssigkeitsbehälters erschweren oder sogar unmöglich machen. Das Kalandrieren der Folienlagen ist aufwendig. Zudem können sich zwischen den aufeinander gelegten Folienlagen unerwünscht Fremdpartikel einschließen, was die hergestellten medizinischen Flüssigkeitsbehälter verunreinigt. Auch das Positionieren der aufeinander gelegten Folienlagen relativ zueinander ist mit Aufwand verbunden.

Aus der EP 0 167 015 A2 ist die Herstellung eines medizinischen Blutbeutels als zweilagiges Blasformteil bekannt.

Die EP 0 104 433 A1 beschreibt die Herstellung eines Hohlkörpers.

Aus der DE 34 312 01 A1 ist die Herstellung von Folien und anderen flächigen Gebilden bekannt.

Die WO 93/14735 A1 beschreibt einen zweilagigen medizinischen Flüssigkeitsbehälter.

Die EP 0 366 554 A2, die den nächstliegenden Stand der Technik offenbart, beschreibt die Herstellung eines Blutbeutels, wobei hierbei eine Kunststoffmasse aus einer Mischung einer flexiblen, unvernetzten Vinylchlorid-Komponente mit Partikeln aus vernetztem Vinylchlorid zum Einsatz kommt. Auch ein Weichmacher kann zum Einsatz kommen.

Es ist daher eine Aufgabe der vorliegenden Erfindung, ein Verfahren zur Herstellung eines medizinischen Flüssigkeitsbehälters derart weiterzubilden, dass es mit weniger Aufwand durchgeführt werden kann, wobei gleichzeitig anspruchsvolle Anforderungen an die Partikelfreiheit des hergestellten medizinischen Flüssigkeitsbehälters erfüllt werden.

Diese Aufgabe ist erfindungsgemäß gelöst durch Verfahren mit den im Anspruch 1 und 6 angegebenen Merkmalen.

Erfindungsgemäß wurde erkannt, dass durch eine gezielt heterogen gemischte Kunststoffmasse Extrusionsbedingungen bereitgestellt werden können, die zu einem oberflächenstrukturierten Extrudat führen. Ein nachträgliches Kalandrieren des Extrudats ist dann nicht mehr erforderlich. Dies vereinfacht die Herstellung des medizinischen Flüssigkeitsbehälters. Auch ohne den Kalandrierschritt lässt sich ein so hergestellter Flüssigkeitsbehälter ohne Weiteres befüllen, da die bei der Extrusion hergestellten Oberflächenstrukturen verhindern, dass die das Behälterinnere des Flüssigkeitsbehälters definierenden Folienlagen zusammenkleben. Erfindungsgemäß wird beim Extrusionsschritt ein einlagiges Extrudat erzeugt. Wände des so hergestellten Flüssigkeitsbehälters sind also aus einem einlagigen Extrudat aufgebaut und nicht, wie dies bei aus dem Stand der Technik bekannten Flüssigkeitsbehältern der Fall ist, aus einem mehrlagigen Extrudat. Dies vereinfacht die Herstellung des Flüssigkeitsbehälters, da auf einen Koextrusionsschritt verzichtet werden kann.

Die hergestellte Kunststoffmasse hat einen niederviskosen Roh-Polymeranteil mit einer ersten Schmelzviskosität mit einem K-Wert zwischen 50 und 70 und einer höherviskosen Roh-Polymeranteil mit einer zweiten Schmelzviskosität mit einem K-Wert zwischen 60 und 100. Derartige Kunststoffmassen haben ein ausreichend unterschiedliches Extrusionsverhalten, so dass eine heterogene Mischung aus diesen beiden Kunststoffmassen zu den erwünschten Oberflächenstrukturen des Extrudats führt. Der niedrigviskose Anteil wird dabei in der Regel in einer größeren Menge vorgelegt und der höherviskose Anteil wird in vergleichsweise kleiner Menge zugesetzt.

Entsprechendes gilt für eine Kunststoffmasse nach Anspruch 2, da sich Suspensions-Polymere in ihrer Schmelzviskosität und damit in ihrem Extrusionsverhalten von anderen Polymeren ausreichend unterscheiden.

Roh-PVC-Polymeranteile nach Anspruch 3 haben sich bei der Herstellung medizinischer Flüssigkeitsbehälter, insbesondere bei der Herstellung von Blutbeuteln, bewährt.

Mischungsverhältnisse nach Anspruch 4 ergeben, wie Messreihen der Anmelderin ergeben haben, in erwünschtem Maße oberflächenstrukturierte Extrudate. In der Regel liegt bei den Mischverhältnissen der niederviskose Roh-Polymeranteil in größerer Menge vor. Ein Mischungsverhältnis von z. B. 10:1 bedeutet daher in der Regel, dass 10 Teile des niederviskosen Roh-Polymeranteils und 1 Teil des höherviskosen Roh-Polymeranteils in der Mischung vorliegen.

Wenn die Kunststoffmasse nach Anspruch 5 aus zwei unterschiedlichen Roh-Polymeranteilen und einem Weichmacher hergestellt wird, kann der Effekt ausgenutzt werden, dass der Weichmacher sich an die beiden Roh-Polymeranteile in unterschiedlicher Weise anbindet, was wiederum zum unterschiedlichen Extrusionsverhalten der beiden Roh-Polymeranteile führt. Bei den unterschiedlichen Roh-Polymeranteilen kann es sich um Polymeranteile mit unterschiedlichen Polymer-Kettenlängen oder um einen Suspensions-Polymeranteil und einen anderen Polymeranteil handeln.

Bei einer heterogenen Mischung nach Anspruch 6 ergeben sich unterschiedliche Extrusionsparameter bestimmter Anteile der hergestellten Kunststoffmasse, da aufgrund der kurzen Mischzeit keine homogene Durchmischung des mindestens einen Roh-Polymeranteils und des Weichmachers erfolgt.

Weichmacher nach Anspruch 7 haben sich bei der Herstellung von Extru-daten mit Oberflächenstrukturen bewährt.

Ein nach Anspruch 8 extrudierter Kunststoff- bzw. Folienschlauch erlaubt eine Herstellung des medizinischen Flüssigkeitsbehälters, bei der keine Kunststofflagen aufeinander gelegt werden, sondern bei der der Flüssigkeitsbehälter direkt aus dem Folienschlauch gefertigt wird. Eine Verunreinigung des Behälterinneren ist dann ausgeschlossen, da die beiden Lagen, die das Behälterinnere zwischen sich einschließen, während der Behälterherstellung nicht voneinander getrennt werden.

Die Vorteile eines Folienschlauchs nach Anspruch 9 entsprechen denen, die vorstehend unter Bezugnahme auf die Verfahrensansprüche genannt wurden.

Entsprechendes gilt für einen medizinischen Behälter nach Anspruch 10.

Bei einem Blutbeutel nach Anspruch 11 kommen die Vorteile des erfindungsgemäß hergestellten medizinischen Behälters besonders gut zum Tragen, da dort besonders hohe Anforderungen an die Partikelfreiheit und an die Befüllbarkeit gestellt werden.

Oberflächenstrukturen nach Anspruch 12 bieten einerseits eine gute Befüllbarkeit des medizinischen Flüssigkeitsbehälters, stellen andererseits aber keine hohen Anforderungen an den Verschlussschritt zum dichten Verschließen des Flüssigkeitsbehälters. Das Verschließen kann beispielsweise durch ein dem Fachmann geläufiges Heißsiegel- oder Schweißverfahren erfolgen.

Ausführungsbeispiele der Erfindung werden nachfolgend anhand der Zeichnung näher erläutert. In dieser zeigen:
- Fig. 1: einen medizinischen Flüssigkeitsbehälter aus flexiblem Kunststoffmaterial in einer Aufsicht;
- Fig. 2: ein Ablaufschema eines Verfahrens zur Herstellung des Flüssigkeitsbehälters nach Fig. 1; und
- Fig. 3: ein Ablaufschema eines weiteren Verfahrens zur Herstellung des Flüssigkeitsbehälters nach Fig. 1.

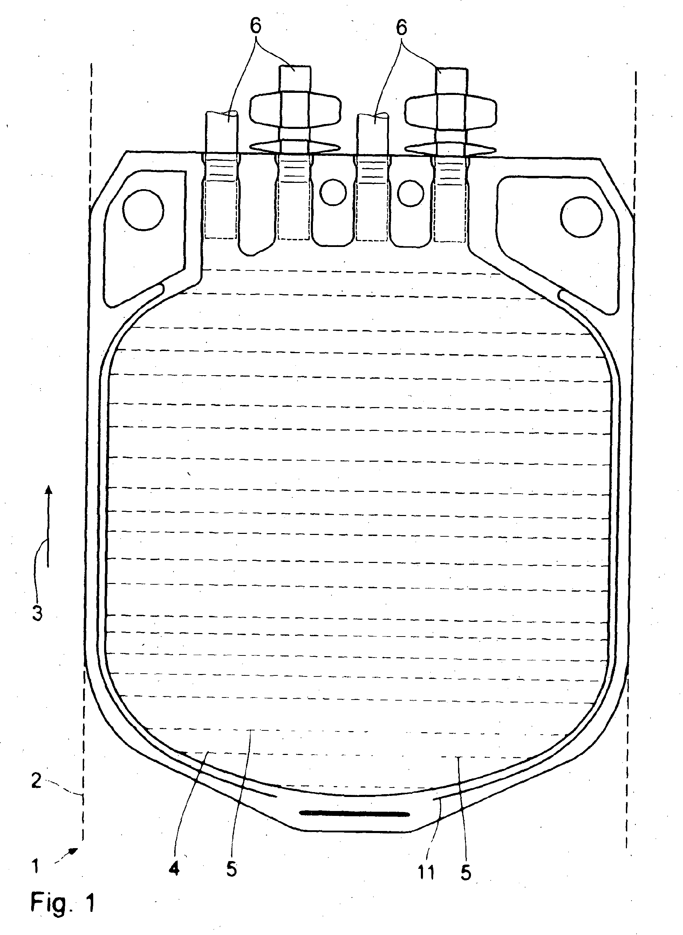

Fig. 1 zeigt einen Blutbeutel 1 als Beispiel für einen medizinischen Flüssigkeitsbehälter. Der Blutbeutel 1 ist aus einem flexiblen Kunststoffmaterial, im vorliegenden Fall aus PVC. Zwischenprodukt bei der Herstellung des Blutbeutels 1 ist ein Folienschlauch 2, dessen Längserstreckung längs einer Richtung 3 in der Fig. 1 durch gestrichelte Linien angedeutet ist.

Behälterwände 4 des Blutbeutels 1 haben quer zur Längserstreckung 3 verlaufende Oberflächenstrukturen 5. Letztere sind in der Darstellung der Fig. 1 als dichte Abfolge von senkrecht zur Längserstreckung 3 verlaufenden Linien zu erkennen. Längs einer derartigen Linie senkrecht zur Längserstreckung 3 ist die Schichtstärke der Behälterwände 4 in etwa konstant. In Richtung der Längserstreckung 3, also senkrecht zu den Linien, variiert die Schichtstärke der Behälterwände 4, so dass dort die Oberflächenstrukturen 5 messbar und auch fühlbar sind. Die Oberflächenstrukturen 5 und damit die Schichtstärkenvariation der Behälterwände 4 weisen eine typische mittlere Größe von 15 µm bis 200 µm auf. Die Behälterwände 4 sind also zum Inneren des Blutbeutels hin und auch nach außen hin rau.

Die Oberflächenstrukturen 5 können durch ihre gemessenen Rautiefen und durch ihren Mittenrauwert charakterisiert werden. Dabei kann unterschieden werden, ob der entsprechende Rauigkeitsparameter längs der Oberflächenstrukturen 5 oder quer zu diesen gemessen wird. Eine typische Messreihe der Rautiefen längs der Oberflächenstrukturen 5 lautet (in *µ*m): 20, 23, 24, 30. Eine typische Messreihe der Rautiefe quer zu den Oberflächen-strukturen 5 lautet (in *µ*m): 29, 36, 47. In diesem Fall liegt eine Schichtstärkenvariation also grob zwischen 15 und 55 *µ*m vor.

Eine typische Messreihe des Mittenrauwerts längs der Oberflächenstrukturen 5 lautet (in *µ*m): 3, 4, 5. Eine typische Messreihe des Mittenrauwerts quer zu den Oberflächenstrukturen 5 lautet (in *µ*m): 6, 6, 8. Typische Werte für den Mittenrauwert liegen also zwischen 2 und 10 *µ*m.

Der Blutbeutel 1 weist insgesamt vier Anschlussstutzen 6 auf, deren Aufbau an sich bekannt ist.

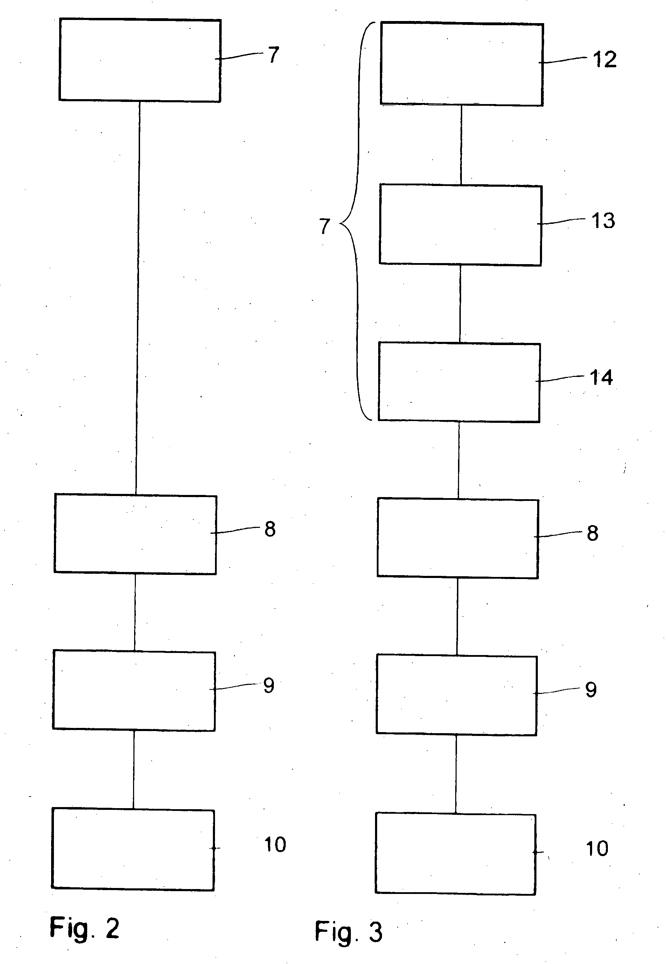

Ein erstes Herstellungsverfahren für den Blutbeutel 1 wird nachfolgend anhand der Fig. 2 erläutert. Zunächst wird in einem Herstellungsschritt 7 eine Kunststoffmasse aus einer heterogenen Mischung aus einem ersten, niederviskosen Roh-Polymeranteil mit einer ersten Schmelzviskosität und einem zweiten, höherviskosen Roh-Polymeranteil mit einer zweiten Schmelzviskosität hergestellt, wobei die zweite Schmelzviskosität größer ist als die erste Schmelzviskosität. Bei den beiden Roh-Polymeranteilen handelt es sich beim Beispiel des Blutbeutels 1 um zwei Roh-PVC-Polymeranteile, nämlich um einen Anteil Suspensions-PVC und um einen anderen Anteil PVC. Bei den beiden Roh-Polymeranteilen kann es sich auch um Anteile des gleichen Polymers mit unterschiedlichen Kettenlängen handeln.

Der niederviskose Roh-Polymeranteil hat eine Schmelzviskosität mit einem K-Wert zwischen 50 und 70. Der höherviskose Roh-Polymeranteil hat eine Schmelzviskosität mit einem K-Wert zwischen 60 und 100. Die beiden Roh-Polymeranteile werden beim Herstellungsschritt 7 in einem Mischungsverhältnis von 10:1 bis 3:1 zugegeben. Die Verhältnisse beim Mischen der beiden Roh-Polymeranteile werden so gewählt, dass die Roh-Polymeranteile sich gezielt nicht homogen vermischen, sondern dass eine heterogene Mischung nach Abschluss des Herstellungsschritts 7 verbleibt. Diese heterogene Mischung enthält Bereiche, die nahezu rein aus dem ersten Roh-Polymeranteil bestehen, und Bereiche, die nahezu rein aus dem zweiten Roh-Polymeranteil bestehen.

Nach dem Herstellungsschritt 7 wird die Kunststoffmasse in einem Extrusionsschritt 8 extrudiert. Aufgrund der unterschiedlichen Schmelzviskositäten der beiden Roh-Polymeranteile und aufgrund der Heterogenität der hergestellten Mischung entstehen bei der Extrusion die Oberflächenstrukturen 5, da die Anteile der Mischung mit nahezu reinem niederviskosen Roh-Polymeranteil zu einer anderen Schichtstärke des Folienschlauchs 2 führen als die Anteile mit nahezu reinem höherviskosen Roh-Polymeranteil. Bei dem Extrusionsschritt 8 wird der Folienschlauch 2 extrudiert. Der extrudierte Folienschlauch 2 wird nachfolgend in einem Konfektionierschritt 9 konfektioniert. Hierbei wird der Folienschlauch 2 in Abschnit-te, die den später hergestellten Blutbeuteln 1 in ihrer Länge entsprechen, unterteilt und gegebenenfalls in Form geschnitten.

Schließlich wird der konfektionierte Folienschlauch 2 in einem abschließenden Verschlussschritt 10 zum fertigen Blutbeutel 1 verschlossen. Dies geschieht durch umlaufendes Verschweißen des Folienschlauchs längs einer Schweißlinie 11.

Anhand der Fig. 3 wird nachfolgend ein alternatives Verfahren zur Herstellung des Blutbeutels 1 beschrieben. Verfahrensschritte, die denjenigen entsprechen, die vorstehend schon unter Bezugnahme auf die Fig. 2 erläutert wurde, tragen die gleichen Bezugsziffern und werden nicht nochmals im Einzelnen diskutiert. Der Herstellungsschritt 7 ist beim Verfahren nach Fig. 3 in drei Einzelschritte unterteilt. Zunächst wird in einem Roh-Herstellungsschritt 12 eine Kunststoffmasse aus zwei unterschiedlichen Roh-Polymeranteilen hergestellt. Hierbei wird eine heterogene Mischung aus den beiden Roh-Polymeranteilen erzeugt. Anschließend wird in einem Zugabeschritt 13 ein Weichmacher zugegeben. Hierbei handelt es sich um einen der folgenden Weichmacher: DEHP (Di(2-ethylhexyl)phthalat), TEHTM (Tri(2-ethylhexyl)trimellitate), DINCH (Di-isononyl-cyclohexan-1,2-dicarboxylat), ESO (epoxidiertes Sojaöl). Auch eine Mischung dieser Weichmacher kann zugegeben werden. Der Weichmacher wird kurz vor Abschluss des Herstellungsschritts 7 zugegeben, so dass ein Mischschritt 14 des Herstellungsschritts 7, bei dem der Weichmacher mit den Roh-Polymeranteilen vermischt wird, kurz ist. Dies führt dazu, dass eine heterogene Mischung des Weichmachers mit den Roh-Polymeranteilen erzeugt wird.

Anschließend wird aus der so hergestellten Kunststoffmasse der Folienschlauch 2 extrudiert. Die unterschiedlichen Schichtstärken des Folienschlauchs 2, also die Oberflächenstrukturen 5, entstehen beim Verfahren nach Fig. 3 aufgrund der Überlagerung mehrerer Effekte. Zum Einen kann sich ein Schichtstärkenunterschied aufgrund unterschiedlicher Schmelzviskositäten der Roh-Polymeranteile ergeben, wie vorstehend im Zusammenhang mit dem Verfahren nach Fig. 2 beschrieben. Weiterhin können die Roh-Polymeranteile ein unterschiedliches Anbindungsverhalten, was den Weichmacher betrifft, zeigen. So kann der erste Roh-Polymeranteil den Weichmacher zum Beispiel schon nach kurzer Mischzeit gut an sich binden, während der zweite Roh-Polymeranteil nach Abschluss des Mischschritts 14 den Weichmacher nicht oder nur unvollständig an sich gebunden hat. Dies vergrößert die Unterschiede beim Extrusionsverhalten der beiden Roh-Polymeranteile. Schließlich sorgt noch der Effekt, dass aufgrund der kurzen Mischzeit der Weichmacher nicht überall mit den beiden Roh-Polymeranteilen in Kontakt kommen konnte, für eine weitere Heterogenität der erzeugten Kunststoffmasse, was deren Extrusionsverhalten angeht. All diese sich überlagernden Effekte begünstigen die Ausbildung der Oberflächenstrukturen 5. Nach dem Herstellungsschritt 7 folgen der Extrusionsschritt 8, der Konfektionierschritt 9 und der Verschlussschritt 10, wie vorstehend unter Bezugnahme auf das Verfahren nach Fig. 2 beschrieben.

In einer Abwandlung des Verfahrens nach Fig. 3 kann die Kunststoffmasse auch nur aus einem Roh-Polymeranteil hergestellt werden, dem ein Weichmacher in einer heterogenen Mischung zugeführt wird. Die beiden Anteile der Kunststoffmasse, die sich in ihrem Extrusionsverhalten unterscheiden und dadurch die Oberflächenstrukturen 5 ausbilden, sind bei dieser Abwandlung einerseits der Anteil der Kunststoffmasse, an dem sich Weichmacher angebunden hat, und andererseits der weichmacherfreie Roh-Polymeranteil. Je nach dem verwendeten Weichmacher und den K-Werten der Roh-Polymeranteile unterscheiden sich die hergestellten Oberflächenstrukturen 5, was die gemessenen Schichtdickenvariationen, die gemessenen Rautiefen und die gemessenen Mittenrauwerte angeht.

Nachfolgend wird noch ein Ausführungsbeispiel beschrieben, bei dem das flexible Kunststoffmaterial aus zwei PVC-Anteilen mit unterschiedlichen K-Werten und einem Weichmacher gemischt wird. Bei dem Weichmacher handelt es sich um DEHP. Die beiden Roh-Polymeranteile sind PVC mit einem K-Wert von 70 und für die Strukturierung sorgendes PVC mit einem K-Wert von 80. Diese Anteile werden bei einer Mischtemperatur von 160°C gemischt. Der PVC-Anteil mit K-Wert 80 wird nach einer Mischzeit von 18 Minuten den anderen, zunächst vermischten Anteilen, also dem Weichmacher und dem PVC-Anteil mit K-Wert 70, zugegeben.

## Patentansprüche

1. Verfahren zur Herstellung eines medizinischen Flüssigkeitsbehälters (1) aus flexiblem Kunststoffmaterial mit folgenden Schritten:
- Herstellen (7) einer Kunststoffmasse aus einer heterogenen Mischung aus einem ersten, niederviskosen Roh-Polymeranteil mit einer ersten Schmelzviskosität und einem zweiten, höherviskosen Roh-Polymeranteil mit einer zweiten Schmelzviskosität, die größer ist als die erste Schmelzviskosität,
- Erzeugen eines einlagigen Extrudats durch Extrudieren (8) der Kunststoffmasse,
- Konfektionieren (9) des Extrudats,
- Verschließen (10) des konfektionierten Extrudats zum fertigen Flüssigkeitsbehälter (1),
**dadurch gekennzeichnet, dass** die Kunststoffmasse mit einem niederviskosen Roh-Polymeranteil mit einer ersten Schmelzviskosität mit einem K-Wert zwischen 50 und 70 und mit einem höherviskosen Roh-Polymeranteil mit einer zweiten Schmelzviskosität mit einem K-Wert zwischen 60 und 100 hergestellt wird, so dass die heterogene Mischung zu Oberflächenstrukturen des Extrudats führt.

2. Verfahren nach Anspruch 1, **dadurch gekennzeichnet, dass** die Kunststoffmasse mit einem Roh-Polymeranteil, der als Suspensions-Polymer zugegeben wird, hergestellt wird.

3. Verfahren nach einem der Ansprüche 1 bis 2, **dadurch gekennzeichnet, dass** die Kunststoffmasse aus zwei Roh-PVC-Polymeranteilen hergestellt wird.

4. Verfahren nach einem der Ansprüche 1 bis 3, **dadurch gekennzeichnet, dass** die Roh-Polymeranteile in einem Mischungsverhältnis von 10:1 1 bis 3:1 bei der Herstellung (7) der Kunststoffmasse zugegeben werden.

5. Verfahren nach einem der Ansprüche 1 bis 4, **dadurch gekennzeichnet, dass** die Kunststoffmasse aus zwei unterschiedlichen Roh-Polymeranteilen und einem Weichmacher hergestellt wird.

6. Verfahren nach Anspruch 5, **dadurch gekennzeichnet, dass** die heterogene Mischung durch Zugabe (13) des Weichmachers kurz vor der Extrusion (8) hergestellt wird.

7. Verfahren nach einem der Ansprüche 5 bis 6, **dadurch gekennzeichnet, dass** als Weichmacher mindestens ein Weichmacher aus der folgenden Gruppe zugegeben wird:
- DEHP,
- TEHTM,
- DINCH,
- ESO.

8. Verfahren nach einem der Ansprüche 1 bis 7, **dadurch gekennzeichnet, dass** beim Extrudieren (8) ein Kunststoff- bzw. Folienschlauch hergestellt wird.

9. Folienschlauch (2) als Zwischenprodukt für einen medizinischen Behälter (1), hergestellt aus einem oberflächenstrukturierten Extrudat, erzeugt nach einem Verfahren nach einem der Ansprüche 1 bis 8, wobei die heterogene Mischung zu Oberflächenstrukturen des Extrudats führt und wobei beim Herstellen des Folienschlauchs die Verfahrensschritte Konfektionieren (9) und Verschließen (10) weggelassen sind.

10. Medizinischer Behälter (1), hergestellt aus einem oberflächenstrukturierten Extrudat, erzeugt nach einem Verfahren nach einem der Ansprüche 1 bis 8.

11. Medizinischer Behälter nach Anspruch 10, ausgebildet als Blutbeutel.

12. Folienschlauch nach Anspruch 9 oder medizinischer Behälter nach einem der Ansprüche 10 bis 11, **gekennzeichnet durch** Oberflächenstrukturen (5) mit einer Schichtdickenvariation von 15 bis 200 µm.

## Claims

1. Method of producing a medical fluid container (1) from a flexible plastic material, the method comprising the following steps:
- producing (7) a plastic compound from a heterogeneous mixture of a first, lower-viscosity raw polymer component having a first melt viscosity and a second, higher-viscosity raw polymer component having a second melt viscosity which is greater than the first melt viscosity;
- forming a single-layer extrudate by extruding (8) the plastic compound;
- confectioning (9) the extrudate;
- sealing (10) the confectioned extrudate to form the finished fluid container (1),
**characterized in that** the plastic compound is produced using a lower-viscosity polymer component having a first melt viscosity with a K-value between 50 and 70, and a higher-viscosity raw polymer component having a second melt viscosity with a K-value between 60 and 100, such that the heterogeneous mixture results in surface structured of the extrudate.

2. Method according to claim 1, **characterized in that** the plastic compound is produced using a raw polymer component which is added in the form of a suspension polymer.

3. Method according to one of claims 1 to 2, **characterized in that** the plastic compound is produced from two raw PVC polymer components.

4. Method according to one of claims 1 to 3, **characterized in that** the raw polymer components are added at a mixing ratio of 10:1 to 3:1 during the production (7) of the plastic compound.

5. Method according to one of claims 1 to 4, **characterized in that** the plastic compound is produced from two different raw polymer components and a softener.

6. Method according to claim 5, **characterized in that** the heterogeneous mixture is produced by adding (13) the softener just before the extrusion (8).

7. Method according to one of claims 5 to 6, **characterized in that** at least one softener from the following group is added as softener:
- DEHP;
- TEHTM;
- DINCH;
- ESO.

8. Method according to one of claims 1 to 7, **characterized in that** a plastic tubing and film tubing, respectively, is produced during extrusion (8).

9. Film tubing (2) as intermediate product for a medical container (1), manufactured from a surface-structured extrudate, produced according to a method according to one of claims 1 to 8, with the heterogeneous mixture resulting in surface structures of the extrudate and with the method steps confectioning (9) and sealing (10) being omitted in the production of the film tubing.

10. Medical container (1), manufactured from a surface-structured extrudate, produced according to a method according to one of claims 1 to 8.

11. Medical container according to claim 10, the container being configured as a blood bag.

12. Film tubing according to claim 9 or medical container according to one of claims 10 to 11, **characterized by** surface structures (5) with a typical layer thickness variation of 15 to 200 µm.

## Revendications

1. Procédé de fabrication d'un récipient à liquide médical (1) en matière synthétique flexible, comprenant les étapes suivantes :
- fabrication d'une masse de matière synthétique à partir d'un mélange hétérogène constituée par une première partie de polymère brut de faible viscosité, ayant une première viscosité à l'état fondu, et par une seconde partie de polymère brut de viscosité élevée, possédant une seconde viscosité à l'état fondu qui est plus élevée que la première viscosité à l'état fondu,
- réalisation d'un produit d'extrusion en une couche par extrusion (8) de la masse de matière synthétique,
- confection (9) du produit d'extrusion,
- obturation (10) du produit d'extrusion confectionné pour former un récipient à liquide (1) terminé,
**caractérisé en ce que** la masse de matière synthétique est fabriquée avec une partie de polymère brut de faible viscosité ayant une première viscosité à l'état fondu de constante K entre 50 et 70 et avec une partie de polymère brut de viscosité élevée possédant une seconde viscosité à l'état fondu d'une constante K entre 60 et 100, de sorte que le mélange hétérogène mène à des structures de surfaces du produit d'extrusion.

2. Procédé selon la revendication 1 **caractérisé en ce que** la masse de matière synthétique est fabriquée avec une partie de polymère brut qui est ajoutée sous la forme d'une suspension de polymère.

3. Procédé selon les revendications de 1 à 2 **caractérisé en ce que** la masse de matière synthétique est fabriquée à partir de deux parties de polymère PVC brut.

4. Procédé selon l'une des revendications de 1 à 3 **caractérisé en ce que** les parties de polymère brut sont ajoutées dans un rapport de mélange entre 10 : 1 et 3 : 1 lors de la fabrication (7) de la masse de matière synthétique.

5. Procédé selon l'une des revendications de 1 à 4 **caractérisé en ce que** la masse de matière synthétique est fabriquée à partir de deux parties différentes de polymère brut et d'un plastifiant.

6. Procédé selon la revendication 5 **caractérisé en ce que** le mélange hétérogène est fabriqué par l'addition (13) du plastifiant juste avant l'extrusion (8).

7. Procédé selon l'une des revendications de 5 à 6 **caractérisé en ce qu**'en tant que plastifiant, au moins un plastifiant du groupe suivant est ajouté :
- DEHP,
- TEHTM,
- DINCH,
- ESO.

8. Procédé selon l'une des revendications de 1 à 7 **caractérisé en ce que** lors de l'extrusion (8), une matière synthétique, respectivement un manchon en film, est fabriqué.

9. Manchon en film (2) servant de produit intermédiaire pour un récipient médical (1) fabriqué à partir d'un produit d'extrusion structuré en surface, réalisé d'après un procédé selon l'une des revendications de 1 à 8, le mélange hétérogène provoquant des structures de surface du produit d'extrusion et les étapes de procédé de confection (9) et d'obturation (10) étant omises lors de la fabrication du manchon en film.

10. Récipient médical fabriqué à partir d'un produit d'extrusion structuré en surface réalisé d'après un procédé selon l'une des revendications de 1 à 8.

11. Récipient médical selon la revendication 10 conçu en tant que poche à sang.

12. Manchon selon la revendication 9 ou récipient médical selon l'une des revendications de 10 à 11 **caractérisés par** des structures de surface (5) ayant une variation d'épaisseur de couche entre 15 et 200 µm.
